# EUROPEAN PATENT SPECIFICATION

(11) **EP 4 343 473 B1**
(45) Date of publication and mention of the grant of the patent: **15.04.2026**
(21) Application number: 22196887.8
(22) Date of filing: 21.09.2022
(51) Int. Cl.: G05B 19/418

(54) **VIRTUAL DEPLOYMENT OF DISTRIBUTED CONTROL SYSTEMS FOR CONTROL LOGIC TESTING**
VIRTUELLER EINSATZ VON VERTEILTEN STEUERUNGSSYSTEMEN ZUR STEUERLOGIKPRÜFUNG
DÉPLOIEMENT VIRTUEL DE SYSTÈMES DE COMMANDE DISTRIBUÉS POUR TEST DE LOGIQUE DE COMMANDE

(43) Date of publication of application: 27.03.2024
(73) Proprietor: ABB SCHWEIZ AG, 5400 Baden (CH)
(72) Inventor: KOZIOLEK, Heiko, 76227 Karlsruhe (DE); HARK, Rhaban, 64331 Weiterstadt (DE); ESKANDANI, Nafise, 64380 Rossdorf (DE)
(74) Representative: Maiwald GmbH

(56) References cited:
- WO-A1-2017/115162
- US-A1- 2016 033 952

## Description

### FIELD OF THE INVENTION

The invention relates to the testing of control logic for distributed control systems that are used to execute industrial processes on industrial plants.

### BACKGROUND

Control logic for automation systems is error-prone and needs to be thoroughly tested before starting the actual production to avoid harm to humans and equipment. Testing the logic late in the commissioning phase when the servers and controllers are already installed can delay the time-to-production in case errors are found late and need to be fixed. Thus, in the design phase, a control system can be tested in a simulation environment that stimulates the control logic input according to an IO simulator (e.g., simulating temperature, flow, level, pressure, etc.). However, maintaining a separate hardware and software installation for such a simulation environment is laborious and costly and consequently simulations are often only cost-effective for extremely large installations. Setting up simulation systems is still a mostly manual process and requires purchasing hardware, installing operating systems, installing security measures, configuring networks and deploying software. This can lead to human errors, is tedious and expensive. When commissioning the actual target system, a similar laborious and error-prone procedure needs to be followed again, piling up on the additional costs and production delays.

EP 2 778 816 B1 discloses a method for testing a distributed control system. On a remote data processing server, multiple virtual machine are started. Such virtual machines may include soft emulators to emulate elements of the DCS, so that the device software for such a device may be tested.

US 2016/033 952 A1 discloses a system for testing a distributed control system of an industrial plant that includes at least two industrial control devices and at least one data communication device. The system includes at least one engineering computer that includes an engineering data storage unit for storing engineering data of at least one part of the distributed control system, and at least one human machine interface for manipulating the engineering data. The system also includes an emulating virtual machine on which a soft emulator is installed for emulating one of the at least two industrial control devices and the at least one data communication device.

WO 2017/115 162 A1 discloses techniques for generating and executing test cases for testing distributed control systems of industrial plants. A set of active control functions in a part of an industrial plant is determined based on a process topology corresponding to the part of the industrial plant and a control topology corresponding to the part of the industrial plant. Thereafter, test cases are generated for at least one active control function. The generated test cases are executed on at least one of a process simulation model corresponding to the industrial plant and a control emulator emulating an industrial control device of the DCS.

### OBJECTIVE OF THE INVENTION

It is therefore an objective of the invention to facilitate and speed up the testing of control logic for a to-be-deployed distributed control system, and also to improve the quality of the obtained results.

This objective is achieved by the method according to the independent claim. Further advantageous embodiments are detailed in the respective dependent claims.

### DISCLOSURE OF THE INVENTION

The invention is defined by the appended claims. Embodiments and examples not covered by the claims are presented to illustrate, and facilitate the understanding of, the claimed invention.

The invention provides a computer-implemented method for creating a virtual deployment of a distributed control system, DCS, for a given industrial process. That is, the task is to set up a mock-up of a distributed control system with a functionality that could execute the industrial process when run on a DCS physically deployed in the plant. The purpose for such a virtual deployment is two-fold: First, it can be used to test whether exactly this deployment, when set up in physical form, would be suitable to execute the industrial process. Second, it can be used as a platform for testing the control logic.

The method starts with the providing a topology of the assets executing the industrial process. This topology describes which assets are needed to execute the industrial process, in which order these assets have to work together to achieve this, and where the assets are located. Also, control logic for controlling the assets is provided. This control logic may comprise part of, or all of, the control logic that is necessary to execute the industrial process as a whole.

Also, an I/O simulator is provided. This I/O simulator is configured to supply, to the DCS, sensor and/or actor data that is realistic in the context of the given industrial process. Basically, in a virtual deployment that is not yet connected to the real process, the I/O simulator makes up for the missing connection to a real process, so that the control logic and DCS have some realistic data to work on and their behavior in both static and dynamic situations can be studied. The I/O simulator can come from any suitable source. For example, it may be inputted by a user, obtained from a library, or generated automatically based on the topology of the assets executing the industrial process. Exemplary methods for automatically generating I/O simulators are given in
- Arroyo, E., Hoernicke, M., Rodriguez, P., & Fay, A. (2016). Automatic derivation of qualitative plant simulation models from legacy piping and instrumentation diagrams. Computers & Chemical Engineering, 92, 112-132;
- Barth, M., & Fay, A. (2013). Automated generation of simulation models for control code tests. Control Engineering Practice, 21(2), 218-230; and
- Hoernicke, M., Fay, A., & Barth, M. (2015, September). Virtual plants for brown-field projects. In 2015 IEEE 20th Conference on Emerging Technologies & Factory Automation (ETFA) (pp. 1-8).

The I/O simulator may, for example, be a low-fidelity simulator providing artificially calculated sensor and actor values for basic functionality tests of the process control system. Alternatively, the I/O simulator can be a high-fidelity simulator integrating specialized simulation libraries for chemical or other processes. Depending on the I/O Simulator's fidelity, different kinds of tests can be performed later, e.g., basic functionality tests vs. more sophisticated process optimizations. One exemplary way of derive a low-fidelity I/O simulator automatically from the topology of assets for running the process and the control logic is to track the flow of a test fluid, such as water, through the plant. Even with a low-fidelity I/O simulator that does not include chemical reactions of substances, several software errors in the control logic, as well as many problems with the DCS itself, can be found.

High-fidelity I/O simulations can go beyond these low-level errors and optimize the entire automation parametrization including Advanced Process Control. However, such simulations often require purpose-built simulation libraries for custom chemical processes, which are thus created by specialists from dedicated organizations and often incur high licensing costs. Therefore, such high-fidelity simulations are usually built only for large and expensive process plants.

Based at least in part on the topology of assets and on the control logic, a topology of devices that form part of the DCS is determined. That is, the topology of assets in the physical world of the industrial plant affects the topology of the devices of the DCS and their connections. For example, if the plant is divided into different sections that reside in different buildings, this division will also be present in the topology of the DCS. This is important because it makes tests of the DCS based on the virtual deployment more realistic. For example, if the virtual deployment is divided into different sections like the actual plant is, connectivity and bandwidth issues for traffic between the sections may be studied.

Based at least in part of this topology of DCS devices (also called IT-topology, as opposed to OT-topology for the topology of physical industrial assets), and optionally also on the control logic, at least one declarative and/or imperative description of the DCS that characterizes multiple devices of the DCS, their placement, and their connections is established. This declarative and/or imperative description contains all information that is required to set up the virtual deployment. Ideally, this declarative and/or imperative description is idempotent, meaning that irrespective of a starting state of an environment, deploying the DCS will always move this environment to the same end state. Examples for declarative and/or imperative descriptions of virtual deployments include:
- Docker Compose files that define one or more services and how they work together;
- Kubernetes templates that define how an application is assembled from multiple containers;
- NixOS configuration files that completely describe the system configuration and installed software on a physical or virtual machine running the NixOS operating system; and
- OASIS TOSCA templates that define services and their deployment to computing nodes.

Based at least in part on the declarative and/or imperative description, virtual instances of the devices of the DCS and their connections are created in a chosen environment. Herein, at least one device of the DCS is connected to at least one I/O simulator, so that the sought virtual deployment of the DCS results.

Both for the testing of the DCS deployment itself and for the testing of the control logic, it is an important advantage that the deployment based on declarative and/or imperative descriptions is reproducible. That is, one and the same description may always be rendered in the same manner. The description may also be rendered in a manner that copes with slight changes in the deployment topology, e.g., having a few more or less computing nodes with different hardware characteristics in a different target environment without affecting the functionality of the system and the functional testing results. This means that, if changes are necessary and the description is amended, the resulting change to the deployment and its behavior can directly be attributed to the change in the description. It is therefore possible to optimize the deployment with targeted changes to the description. For example, certain parameters in the description (such as cloud instance types for DCS devices) may be varied, a new deployment may be created, and it may then be evaluated whether this is better than the previous deployment.

In this manner, a Factory Acceptance Test, FAT, for the DCS can be performed much quicker and at a much lower cost because the process is automated to a much larger extent. Previously, performing a FAT with a simulation system was a mostly manual process and required purchasing hardware, installing operating systems, installing security measures, configuring networks and deploying software. If it then turned out that modifications to the DCS were necessary, corresponding modifications had to be carried over to the simulation system for a new FAT. The same applies to re-tests that may become necessary when the DCS, or its control logic, is updated or expanded.

Moreover, when a description has been determined whose rendering in a virtual deployment exhibits a satisfactory performance, the real production deployment may be made on physical hardware in the industrial plant using the same description. Only the target of the deployment needs to be changed. But by virtue of the declarative and/or imperative description, if the DCS exhibits a satisfactory performance in the virtual deployment, it will also do so in the production deployment. In this context, the presence of the I/O simulator makes the virtual deployment much more realistic, and thus better transferable to a production deployment where the I/O simulator will be replaced by the actual industrial plant. That is, the encoding of the DCS in the declarative and/or imperative description in an easily re-usable and re-executable manner facilitates the switch to a production environment, so that the created and tested DCS may be put to use in the real industrial process.

According to the invention, a representation of an intended state of the DCS is determined from the declarative and/or imperative description. The state of the DCS obtained by creating virtual instances of the devices of the DCS and their connections is then be compared to this intended state. If the actual state of the virtual DCS differs from the intended state, virtual instances of devices of the DCS and their connections are created, modified and/or deleted with the goal of bringing the actual state of the DCS towards its intended state. In this manner, the method can dynamically react to the failing of certain actions during deployment. For example, in a cloud deployment, it is always possible that the deployment of a resource does not succeed on the first try because there is a temporary shortage of resources on the cloud platform.

In a further particularly advantageous embodiment, the declarative and/or imperative description comprises infrastructure-as-code instructions that, when executed by a cloud platform, and/or a virtualization platform, and/or a configuration management tool, causes the cloud platform, and/or the virtualization platform, and/or the configuration management tool, to create a virtual instance of at least one device of the DCS with properties defined in the declarative and/or imperative description. Examples for such infrastructure-as-code instructions include Amazon AWS CloudFormation templates or Terraform configuration files. In this manner, parameters that govern the creation of instances in the cloud may be directly manipulated and optimized.

In particular, the declarative and/or imperative description may characterize
- a number, and/or a clock speed, and/or a duty cycle limit, of processor cores, and/or
- a memory size, and/or
- a mass storage size, and/or
- a type of network interface, and/or
- a maximum network bandwidth,
of at least one compute instance that serves as a virtual instance of at least one device of the DCS, and/or an identifier of an instance type from a library of instance types available on a particular cloud platform.

These quantities may be optimized towards any given goal. For example, one such goal may be minimum resource usage to achieve satisfactory performance of the DCS.

In a further particularly advantageous embodiment, the declarative and/or imperative description characterizes an architecture, a bandwidth, and/or a latency, of at least one network to which multiple virtual instances of devices of the DCS are connected. In this manner, connectivity between the virtual instances may be optimized in the same manner as these instances themselves.

In a further particularly advantageous embodiment, the control logic is test-executed on the virtual deployment of the DCS. The behavior of the control logic is monitored during execution. This behavior is compared to a given expected behavior of the control logic. From the result of this comparison, it is evaluated, according to a predetermined criterion, whether the test of the control logic has passed or failed.

As discussed before, for obtaining a test-bed for testing the control logic, using virtual deployments based on declarative and/or imperative descriptions lowers the cost and improves the reliability. In particular, such virtual deployments may be based on infrastructure-as-code templates embedded into an IT topology specification (e.g., OASIS TOSCA, OASIS CAMP, Ansible playbooks, Terraform deployment models) that can be processed by a software tool called "orchestrator". The specification can be managed with a versioning system, so that rollbacks to former states are possible. The orchestrator interfaces with configuration management tools (e.g., Ansible, Puppet, Chef), infrastructure tools (e.g., AWS CloudFormation, Terraform), container orchestration tools (e.g., Docker Swarm, Kubernetes), operating systems, virtualization platforms (e.g., OpenStack, OpenShift, vSphere), and cloud-based services (e.g., AWS, Google Cloud, Azure).

The topology specification in this invention is integrated with an "IO simulator" generated from a plant topology specification and the control logic, so that a self-contained testing system is created. The IT topology specification allows to quickly deploy the simulated system onto a private/public/hybrid cloud infrastructure, thus saving capital expenses for hardware and turning them into operational expenses for cloud resource subscriptions. As the testing infrastructure is only used temporarily and cloud services follow the pay-per-use payment model, using public cloud server the Total Costs of Ownership for the testing environment can be significantly lowered.

As well as saving the costs, the virtual deployment also saves efforts for manually setting up a testing environment. The topology specification allows modifications to easily test scenarios, such as:
- changing the cloud deployment target (e.g., to choose a provider with a better requirement fit or lower costs, or to change from public to private cloud);
- changing the number of virtual nodes (scaling out/in), test different deployments, come up with optimized deployments;
- changing the workload on the system; and
- changing the deployment target to an on-premises installation, then replacing the simulated sensors and actuators with real devices (no additional manual installation efforts for the on-premises installation).

The simulation allows automation engineers to perform all kinds of tests with the system, such as:
- checking the functionality of the control logic;
- assessing the resource utilization of the designed system to aid capacity planning;
- training plant operators in using the automation system;
- simulating failure scenarios and train appropriate operator actions; and
- changing the configuration of the network and check the accessibility of the nodes.

Thus, in a particularly advantageous embodiment, the test-executing comprises supplying, by the at least one I/O simulator, to the control logic, sensor and/or actor data that, in case a particular to-be-detected software error is present in the control logic, causes the behavior of the control logic to depart from the expected behavior. In this manner, the chance is higher that also software errors which only have consequences in certain operating situations will get caught because these situations are made to occur virtually.

In particular, the to-be-detected software error may comprise one or more of:
- concurrent or other multiple use of one and the same variable;
- wrong setting and resetting of variables;
- wrong reactions of the control logic to changes in variables;
- wrong limit or set-point values;
- missing or wrongly implemented interlocking logic;
- wrongly defined control sequences or sequences of actions; and
- an overflow and/or clipping of variables.

A very prominent example of the last software error in an industrial setting is the loss of the first Ariane V rocket in 1996 due to an integer overflow. With a suitable I/O simulator and virtual DCS deployment, this error might have been spotted before going into production.

In a further particularly advantageous embodiment, in response to determining that the test of control logic has passed, a physical DCS is set up that corresponds to the virtual deployment of the DCS. As discussed before, the software setup on this physical DCS may be made identical to that of the previous virtual DCS just by starting the deployment again based on the same declarative and/or imperative description, with just the target of the deployment changed to the production environment. The devices of the physical DCS are connected to the assets of the industrial process, rather than to the I/O simulator.

In a further particularly advantageous embodiment, in response to determining that the test of the control logic has failed,
- the declarative and/or imperative description of the DCS is modified, and the virtual deployment of the DCS is updated based on this modified declarative and/or imperative description; and/or
- the control logic is modified,
with the goal of improving the performance of the control logic. Also, test-executing is resumed with the updated virtual deployment of the DCS, and/or with the modified control logic.

This is based on the insight that if a control logic fails to execute properly and deliver satisfactory results on a given DCS deployment, the control logic itself is one potential root cause, but not the only one. Rather, it is also possible that the DCS deployment is not adequate. For example, if there is an undue communication delay between two devices of the DCS, this control loop of the control logic may react to a change of a state variable of the process belatedly, and this may cause the performance of the control logic to be inferior.

In a further particularly advantageous embodiment, according to a predetermined criterion, a figure of merit is assigned to a virtual deployment of the DCS and/or to the execution of the control logic on this virtual deployment. The declarative and/or imperative description of the DCS is optimized with the goal of improving this figure of merit, under the constraint that the test of the control logic on the respective virtual deployment of the DCS passes.

In this context, the automatic creation of the virtual deployment of the DCS based on the declarative and/or imperative description has the particular advantage that very many different versions of the description may be rendered to virtual deployments and then tested without human intervention. In particular, if a cloud is used for such deployments, many deployments can be created at the same time. When an optimization for some figure of merit is performed, the usual way to do this efficiently is to compute gradients with respect to the to-be-optimized quantities. But this is not possible in the present context because declarative and/or imperative descriptions comprise very many parameters that are of a discrete nature. Therefore, to perform an optimization, more candidate deployments need to be tested. It would not be possible to perform such an amount of testing with human involvement. But in the cloud, one may throw any amount of computing power at the problem.

In a further particularly advantageous embodiment, at least one failure is simulated in at least one virtual instance of a device of the DCS, and/or in at least one connection of one such instance. The influence of this simulated failure on the behavior of the control logic is then monitored. In this manner, it may be detected which instances or connections are critical for the functioning of the control logic. One possible conclusion to be drawn from this is that it may be worthwhile to provide redundancy for a particular instance or connection in order to improve the reliability.

Because it is computer-implemented, the present method may be embodied in the form of a software. The invention therefore also relates to a computer program with machine-readable instructions that, when executed by one or more computers and/or compute instances, cause the one or more computers and/or compute instances to perform the method described above. Examples for compute instances include virtual machines, containers or serverless execution environments in a cloud. The invention also relates to a machine-readable data carrier and/or a download product with the computer program. A download product is a digital product with the computer program that may, e.g., be sold in an online shop for immediate fulfilment and download to one or more computers. The invention also relates to one or more compute instances with the computer program, and/or with the machine-readable data carrier and/or download product.

### DESCRIPTION OF THE FIGURES

In the following, the invention is illustrated using Figures without any intention to limit the scope of the invention. The Figures show:
Figure 1: Exemplary embodiment of the method 100 for creating a virtual deployment 10* of a distributed control system, DCS 10, for a given industrial process 1;
Figure 2: Exemplary implementation of the method 100 in an industrial plant with an automation engineering system 22 and an on-premises DCS control cluster 42.

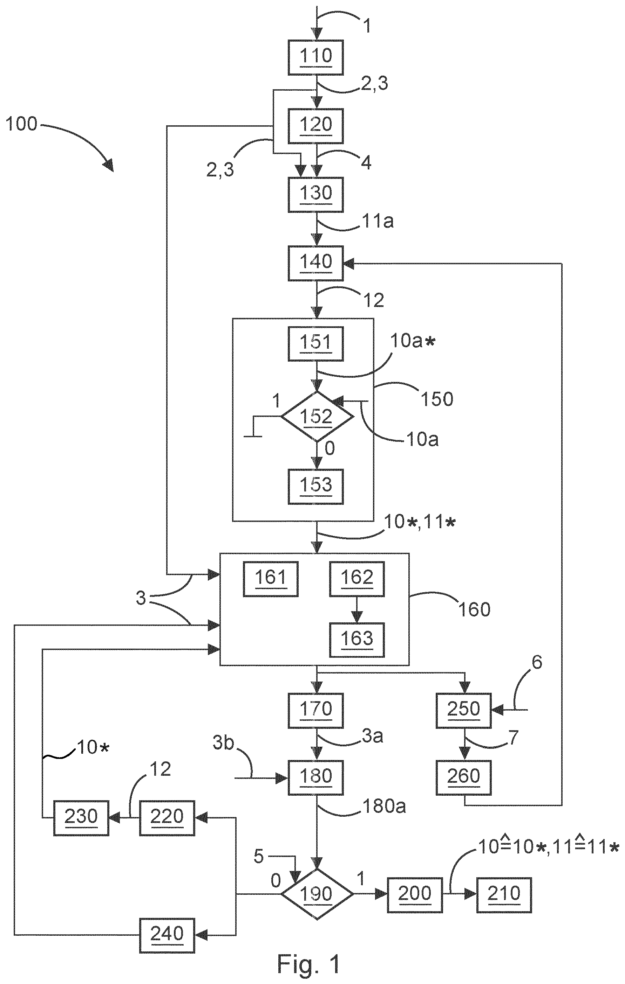

Figure 1 is a schematic flow chart of an embodiment of the method 100 for creating a virtual deployment 10* of a distributed control system, DCS 10, for a given industrial process 1.

In step 110, a topology 2 of the assets executing the industrial process 1 ("OT-Topology"), as well as control logic 3 for controlling these assets, are provided.

In step 120, at least one I/O simulator 4 is provided. This I/O simulator 4 is configured to supply, to the DCS 10, sensor and/or actor data that is realistic in the context of the given industrial process 1.

In step 130, based at least in part on said topology 2 of the assets and on the control logic 3, a topology 11a of devices 11 that form part of the DCS 10 ("IT-Topology") is determined .

In step 140, based at least in part on this topology 11a of devices 11, at least one declarative and/or imperative description 12 of the DCS 10 is established. This declarative and/or imperative description 12 characterizes multiple devices 11 of the DCS 10, their placement, and their connections.

In step 150, based at least in part on the declarative and/or imperative description 12, virtual instances 11* of the devices 11 of the DCS 10 and their connections are created in a chosen environment. At least one device 11 of the DCS 10 is connected to at least one I/O simulator 4, so that the sought virtual deployment 10* of the DCS 10 results.

According to block 151, from the declarative and/or imperative description 12, a representation of an intended state 10a* of the DCS 10 may be determined. According to block 152, the state 10a of the DCS 10 obtained by creating virtual instances 11 of the devices of the DCS 10 and their connections may then be compared to said intended state 10a*. In response to determining that the state 10a of the DCS 10 differs from the intended state 10a* of the DCS 10 (truth value 0), according to block 153, virtual instances 11* of devices 11 of the DCS 10 and their connections may be created, modified and/or deleted with the goal of bringing the state 10a of the DCS 10 towards its intended state 10a*.

In step 160, the control logic 3 is test-executed on the virtual deployment 10* of the DCS 10.

According to block 161, this test-executing may comprise supplying, by the at least one I/O simulator 4, to the control logic 3, sensor and/or actor data that, in case a particular to-be-detected software error is present in the control logic 3, causes the behavior of the control logic to depart from the expected behavior. That is, if the software error is present, it shall be triggered to manifest itself by feeding suitable input data to the control logic 3.

According to block 162, a failure in at least one virtual instance 11* of a device 11 of the DCS 10, and/or in at least one connection of one such instance 11*, may be simulated. According to block 163, the influence of this simulated failure on the behavior of the control logic 3 may then be monitored.

In step 170, the behavior 3a of the control logic 3 during execution is monitored.

In step 180, this behavior 3a is compared to a given expected behavior 3b of the control logic 3.

In step 190, from the result 180a of this comparison 180, it is evaluated, according to a predetermined criterion 5, whether the test of the control logic 3 has passed or failed.

If the test has passed (truth value 1), in step 200, a physical DCS 10 is set up that corresponds to the virtual deployment 10* of this DCS 10. This means that the physical devices 11 of this DCS, including their configurations, also correspond to the virtual instances 11* of devices 11 in the virtual deployment 10*. In step 210, the devices 11 of the physical DCS 10 to the assets executing the industrial process 1, rather than to the I/O simulator 4.

If the test has failed (truth value 0 at diamond 190), in step 220, the declarative and/or imperative description 12 of the DCS 10 may be modified, and the virtual deployment 10* of the DCS (10) may be updated based on this modified declarative and/or imperative description 12 in step 230. Alternatively or in combination to this, in step 240, the control logic 3 may be modified.

The test-executing 160 is then resumed with the updated virtual deployment 10* of the DCS 10, and/or with the modified control logic 3.

In step 250, by a predetermined criterion 6, a figure of merit 7 may be assigned to a virtual deployment 10* of the DCS 10 and/or to the execution of the control logic 3 on this virtual deployment 10*. In step 260, the declarative and/or imperative description 12 of the DCS 10 may then be optimized with the goal of improving this figure of merit 7, under the constraint that the test of the control logic on the respective virtual deployment 10* of the DCS 10 passes.

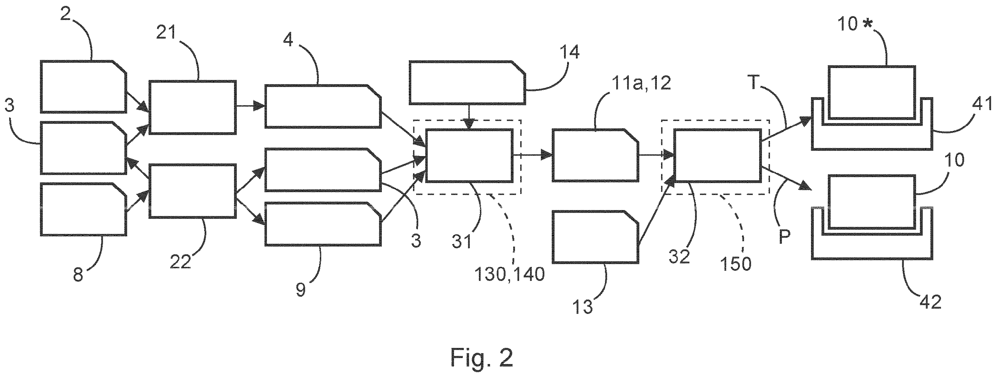

Figure 2 illustrates an implementation of the method 100 in an industrial plant with an automation engineering system 22 and an on-premises DCS control cluster 42.

The control logic 3 is generated by the automation engineering system 22 based on automation requirements 8. From the control logic 3 and the topology 2 of the assets executing the industrial process 1, an I/O simulation generator 21 produces the I/O simulator 4.

The automation engineering system 22 outputs the control logic 3, which may be enriched with an execution engine, as well as process graphics and an HMI system 9. The process graphics and HMI system 9 are conventionally used by plant operators to monitor execution of the industrial process 1, and to monitor performance of the DCS 10.

Based on the control logic 3, the I/O simulator 4, and optionally the process graphics and HMI system 9 and infrastructure templates 14, the topology modeling tool 31 produces a topology 11a of devices 11 that form part of the DCS 10, as well as the declarative and/or imperative description 12 of the DCS 10 that characterizes multiple devices 11 of the DCS 10, as per steps 130 and 140 of method 100 described above. In particular, the infrastructure templates 14 may comprise blueprints of automation tasks for IT infrastructure. For example, they may refer to procedures, APIs, and configurations for different deployment target platforms (e.g., a specific cloud-vendor platform or a private IT infrastructure of an automation customer). The templates provide the link to target platforms and contain all necessary install and monitoring procedures needed to deploy the deployment artifacts. Examples for specific Infrastructure Template formats are Terraform plans, Ansible playbooks, or shell scripts.

The topology modeling tool 31 may have a specification syntax can optionally follow industry-standards, e.g., OASIS TOSCA or OASIS CAMP. Besides the deployment artifacts, IO Simulator, Control Execution Engine and HMI System, the Topology Modeling Tool takes multiple Infrastructure Templates 14 (i.e. blueprints of automation tasks for IT infrastructure) into account. These refer to procedures, APIs, and configurations for different deployment target platforms (e.g., a specific cloud-vendor platform or a private IT infrastructure of an automation customer). The templates provide the link to target platforms and contain all necessary install and monitoring procedures needed to deploy the deployment artifacts. Examples for specific Infrastructure Template formats are Terraform plans, Ansible playbooks, or shell scripts.

The declarative and/or imperative description 12 of the DCS 10 allows to assign software components to specific computer nodes or to specific computer node types. In a distributed control system, a specific assignment of a component to dedicated nodes may be necessary for spatial or networking reasons. If components require a virtualization, such as a hypervisor or container runtime, then the Deployment Architect can specify this using the specification notation, so that the information can later be used by the orchestrator to initialize the respective virtualization infrastructure. The specification may directly include the binary compiled software components or refer to network repositories where the orchestrator can download these binaries (e.g., Docker repositories, Helm chart repositories).

The specification also covers means to integrate required project-specific input parameters (e.g., user credentials, user preferences) to install and start the target software. These can either be asked from the orchestrator user during orchestration or integrated via separate Topology Orchestration Configuration Files 13. These include for example the user credentials and user preferences, as well as the user choice for a particular deployment target (e.g., cloud platform or on-premise cluster). The special benefit of the proposed invention is that the choice for a deployment target is capture only by these configuration files. For a re-deployment of the system from the testing environment in the cloud to the actual runtime environment on-premises, the user only needs to change or edit these configuration files, while the Infrastructure Templates and the declarative and/or imperative description 12 can be re-used as-is. This reduced the complexity for re-deployment and thus the time required and sources for human errors.

As per method step 150 of method 100 described above, the orchestrator 32 produces, from the declarative and/or imperative description 12 and optionally also from the Topology Orchestration Configuration Files 13,
- either a virtual deployment 10* of the DCS 10 for use on a cloud platform 41 for testing (T), or
- configuration for a physical DCS 10 on an on-premise cluster 42 for production (P).

As discussed before, for both types of deployments, the same inputs to the orchestrator 32 may be used. Only the target needs to be switched.

Orchestration of the deployment involves the orchestrator that parses the Topology + Orchestration Specification and Configuration and builds an internal topology representation of the intended deployment architecture. It then executes Infrastructure-as-Code scripts included in the description and updates the internal topology representation accordingly. For example, for each computing node in the description, it invokes a "create" operation that provisions the resource from a public cloud provider or sets it up in a bare-metal cluster. The orchestrator then receives updates regarding the states of nodes and components from the infrastructure (e.g., started, configured, running, stopped, etc.) and updates the internal topology representation accordingly.

The included Infrastructure-as-Code scripts may for example create virtual machines or a container orchestration system. They can be written for different cloud providers (e.g., Microsoft Azure cloud or Amazon Webservices) and interact with their APIs. Alternative scripts for other cloud providers can be "plugged-in" to the Topology + Orchestration specification. Scripts may for example create virtual machines, execute installers of software components, and interact with a software container orchestration API (e.g., K8s API)

The orchestrator also registers events coming from the target infrastructure (e.g., "node down", "component crashed", "threshold reached", "component re-deployed") to be able to update the internal topology representation to the actual state. The orchestrator may have a user interface, so that Deployment Architects or Automation engineers can monitor and edit the topology and the components at runtime.

Once the engineered control logic and the HMI graphics are deployed together with the generated IO simulator 4 in the cloud platform 41, automation engineers can start testing the system. Using a cloud platform allows to bring up many nodes to conduct scalability test. The cloud resources only incur subscription fees during the testing, so that the automation engineers save the capital expenses for installing and administrating a separate test system. The automation engineers can execute start-up and shut-down sequences and observe whether the simulated control system behaves as intended. Via the HMI graphics, they can monitor the simulated system at runtime and interact with faceplates, e.g., changing set points and valve positions to run test scenarios. They can execute entire simulation scripts stimulating the system much faster than in real-time. In this manner, an audit of the DCS 10 can be performed according to any given protocol. If the tests reveal issues in the control logic, the automation engineers can edit the logic in the Automation Engineering system 22 and re-deploy it into the simulation environment.

Once all tests have been successfully executed, the software is ready to be deployed in the actual target environment. During plant commissioning, after the servers and controllers have been installed and connected, the Deployment Architect changes the Topology + Orchestration Specification to deploy the system to the target platform 42. Now, only tests specific for the target platform 42 are required, but no more functional tests are required. This reduces the time-to-production for the system significantly. The cloud platform resources are decommissioned, so that they do not incur subscription fees. At any time, they can be re-activated via the orchestrator 32, for example during plant revisions, where new functionality needs to be tested.

### List of reference signs:

- 1: industrial process
- 2: topology of assets that execute industrial process 1
- 3: control logic for controlling assets of industrial process 1
- 3a: actual behavior of control logic during execution
- 3b: expected behavior of control logic during execution
- 4: I/O simulator for realistic data in process 1
- 5: criterion for test of control logic
- 6: criterion for assigning figure of merit 7
- 7: figure of merit
- 8: automation requirements
- 9: process graphics and HMI system
- 10: distributed control system, DCS
- 10a: state of DCS
- 10a*: intended state of DCS
- 10*: virtual deployment of DCS 10
- 11: devices of DCS 10
- 11*: virtual instances of devices 11
- 12: declarative and/or imperative description of virtual DCS 10*
- 13: Topology and Orchestration Configuration Files
- 14: infrastructure templates
- 21: I/O simulation generator
- 22: automation engineering system
- 31: topology modeling tool
- 32: orchestrator
- 41: cloud platform
- 42: on-premise cluster
- 100: method for creating virtual deployment 10*
- 110: providing topology 2 of assets
- 120: providing I/O simulator 4
- 130: determining topology 11a of devices 11
- 140: establishing declarative and/or imperative description
- 150: creating virtual instances 11* and their connections
- 151: determining intended state 10a* of DCS
- 152: comparing state 10a to intended state 10a*
- 153: creating, modifying and/or deleting virtual instances 11*
- 160: test-executing control logic 3
- 161: supplying data that triggers software error if present
- 162: simulating failure in virtual instance 11* or connection
- 163: monitoring influence of simulated failure
- 170: monitoring behavior 3a of control logic 3
- 180: comparing behavior 3a to expected behavior 3b
- 180a: result of comparison 180
- 190: evaluating fitness of control logic from result 180a
- 200: setting up physical DCS 10
- 210: connecting devices 11 of DCS 10 to assets of process 1
- 220: modifying declarative and/or imperative description 12
- 230: updating virtual deployment 10*
- 240: modifying control logic 3
- 250: determining figure of merit 7 according to criterion 6
- 260: optimizing declarative and/or imperative description 12

## Claims

1. A computer-implemented method (100) for creating a virtual deployment (10*) of a distributed control system, DCS (10), for a given industrial process (1), comprising the steps of:
• providing (110) a topology (2) of the assets executing the industrial process (1), as well as control logic (3) for controlling these assets, said topology describing which assets are needed to execute the industrial process, in which order these assets have to work together to achieve this, and where the assets are located;
• providing (120) at least one I/O simulator (4) that is configured to supply, to the DCS (10), sensor and/or actor data that is realistic in the context of the given industrial process (1);
• determining (130), based at least in part on said topology (2) of the assets and on the control logic (3), a topology (11a) of devices (11) that form part of the DCS (10);
• establishing (140), based at least in part on this topology (11a) of devices (11), at least one declarative and/or imperative description (12) of the DCS (10) that characterizes multiple devices (11) of the DCS (10), their placement, and their connections;
• creating (150), based at least in part on the declarative and/or imperative description (12), virtual instances (11*) of the devices (11) of the DCS (10) and their connections in a chosen environment, wherein at least one device (11) of the DCS (10) is connected to at least one I/O simulator (4), so that the sought virtual deployment (10*) of the DCS (10) results;
• determining (151), from the declarative and/or imperative description (12), a representation of an intended state (10a*) of the DCS (10);
• comparing (152) the state (10a) of the DCS (10) obtained by creating virtual instances (11) of the devices of the DCS (10) and their connections to said intended state (10a*); and
• in response to determining that the state (10a) of the DCS (10) differs from the intended state (10a*) of the DCS (10), creating, modifying and/or deleting (153) virtual instances (11*) of devices (11) of the DCS (10) and their connections with the goal of bringing the state (10a) of the DCS (10) towards its intended state (10a).

2. The method (100) of claim 1, wherein the declarative and/or imperative description (12) comprises infrastructure-as-code instructions that, when executed by a cloud platform, and/or a virtualization platform, and/or a configuration management tool, causes the cloud platform, and/or the virtualization platform, and/or the configuration management tool, to create a virtual instance (11*) of at least one device (11) of the DCS (10) with properties defined in the declarative and/or imperative description (12).

3. The method (100) of any one of claims 1 to 2, wherein the declarative and/or imperative description (12) characterizes
• a number, and/or a clock speed, and/or a duty cycle limit, of processor cores, and/or
• a memory size, and/or
• a mass storage size, and/or
• a type of network interface, and/or
• a maximum network bandwidth,
of at least one compute instance that serves as a virtual instance (11*) of at least one device (11) of the DCS (10), and/or an identifier of an instance type from a library of instance types available on a particular cloud platform.

4. The method (100) of any one of claims 1 to 3, wherein the declarative and/or imperative description (12) characterizes an architecture, a bandwidth, and/or a latency, of at least one network to which multiple virtual instances (11*) of devices (11) of the DCS (10) are connected.

5. The method (100) of any one of claims 1 to 4, further comprising:
• test-executing (160) the control logic (3) on the virtual deployment (10*) of the DCS (10),
• monitoring (170) the behavior (3a) of the control logic (3) during execution;
• comparing (180) this behavior (3a) to a given expected behavior (3b) of the control logic (3); and
• evaluating (190), from the result (180a) of this comparison (180), according to a predetermined criterion (5), whether the test of the control logic (3) has passed or failed.

6. The method (100) of claim 5, wherein the test-executing (160) comprises supplying (161), by the at least one I/O simulator (4), to the control logic (3), sensor and/or actor data that, in case a particular to-be-detected software error is present in the control logic (3), causes the behavior of the control logic to depart from the expected behavior.

7. The method (100) of claim 6, wherein the to-be-detected software error comprises one or more of:
• concurrent or other multiple use of one and the same variable;
• wrong setting and resetting of variables;
• wrong reactions of the control logic to changes in variables;
• wrong limit or set-point values;
• missing or wrongly implemented interlocking logic;
• wrongly defined control sequences or sequences of actions; and
• an overflow and/or clipping of variables.

8. The method (100) of any one of claims 5 to 7, further comprising: in response to determining that the test of the control logic has passed,
• setting up (200) a physical DCS (10) that corresponds to the virtual deployment (10*) of the DCS (10); and
• connecting (210) the devices (11) of the physical DCS (10) to the assets executing the industrial process (1), rather than to the I/O simulator (4).

9. The method (100) of any one of claims 5 to 8, further comprising: in response to determining that the test of the control logic has failed,
• modifying (220) the declarative and/or imperative description (12) of the DCS (10), and updating (230) the virtual deployment (10*) of the DCS (10) based on this modified declarative and/or imperative description (12); and/or
• modifying (240) the control logic (3),
with the goal of improving the performance of the control logic (3), and
• resuming the test-executing (160) with the updated virtual deployment (10*) of the DCS (10), and/or with the modified control logic (3).

10. The method (100) of any one of claims 5 to 9, further comprising:
• assigning (250), by a predetermined criterion (6), to a virtual deployment (10*) of the DCS (10) and/or to the execution of the control logic (3) on this virtual deployment (10*), a figure of merit (7); and
• optimizing (260) the declarative and/or imperative description (12) of the DCS (10) with the goal of improving this figure of merit (7), under the constraint that the test of the control logic on the respective virtual deployment (10*) of the DCS (10) passes.

11. The method of any one of claims 5 to 10, further comprising:
• simulating (162) a failure in at least one virtual instance (11*) of a device (11) of the DCS (10), an/or in at least one connection of one such instance (11*); and
• monitoring (163) the influence of this simulated failure on the behavior of the control logic (3).

12. A computer program, comprising machine-readable instructions that, when executed by one or more computers and/or compute instances, cause the one or more computers and/or compute instances to perform the method (100) of any one of claims 1 to 11.

13. A non-transitory machine-readable data carrier with the computer program of claim 12.

14. One or more computers and/or compute instances with the computer program of claim 12, and/or with the non-transitory machine-readable data carrier of claim 13.

## Patentansprüche

1. Computerimplementiertes Verfahren (100) zum Erstellen einer virtuellen Bereitstellung (10*) eines verteilten Steuerungssystems, DCS (10) für einen vorgegebenen industriellen Prozess (1), das die folgenden Schritte umfasst:
• Bereitstellen (110) einer Topologie (2) der Betriebsmittel, die den industriellen Prozess (1) ausführen, sowie einer Steuerungslogik (3) zum Steuern dieser Betriebsmittel, wobei die Topologie beschreibt, welche Betriebsmittel zur Ausführung des industriellen Prozesses benötigt werden, in welcher Reihenfolge diese Betriebsmittel zusammenarbeiten müssen, um dies zu erreichen, und wo sich die Betriebsmittel befinden;
• Bereitstellen (120) mindestens eines I/O-Simulators (4), der so konfiguriert ist, dass er dem DCS (10) Sensor- und/oder Aktordaten liefert, die im Kontext des gegebenen industriellen Prozesses (1) realistisch sind;
• Bestimmen (130), zumindest teilweise basierend auf der Topologie (2) der Betriebsmittel und der Steuerungslogik (3), einer Topologie (11a) von Geräten (11), die Teil des DCS (10) sind;
• Erstellen (140), zumindest teilweise basierend auf dieser Topologie (11a) von Geräten (11), mindestens einer deklarativen und/oder imperativen Beschreibung (12) des DCS (10), die mehrere Geräte (11) des DCS (10), ihre Platzierung und ihre Verbindungen charakterisiert;
• Erstellen (150), zumindest teilweise basierend auf der deklarativen und/oder imperativen Beschreibung (12), virtueller Instanzen (11*) der Geräte (11) des DCS (10) und ihrer Verbindungen in einer ausgewählten Umgebung, wobei mindestens ein Gerät (11) des DCS (10) mit mindestens einem I/O-Simulator (4) verbunden ist, so dass sich die gesuchte virtuelle Bereitstellung (10*) des DCS (10) ergibt;
• Bestimmen (151) einer Darstellung eines beabsichtigten Zustands (10a*) des DCS (10) aus der deklarativen und/oder imperativen Beschreibung (12);
• Vergleichen (152) des Zustands (10a) des DCS (10), der durch Erstellen virtueller Instanzen (11) der Geräte des DCS (10) und ihrer Verbindungen erhalten wurde, mit dem beabsichtigten Zustand (10a*); und
• als Reaktion auf die Feststellung, dass der Zustand (10a) des DCS (10) vom beabsichtigten Zustand (10a*) des DCS abweicht (10) unterscheidet, Erstellen, Ändern und/oder Löschen (153) virtueller Instanzen (11*) von Geräten (11) des DCS (10) und deren Verbindungen mit dem Ziel, den Zustand (10a) des DCS (10) seinem beabsichtigten Zustand (10a) anzunähern.

2. Verfahren (100) nach Anspruch 1, wobei die deklarative und/oder imperative Beschreibung (12) Infrastructure-as-Code-Anweisungen umfasst, die, wenn sie von einer Cloud-Plattform und/oder einer Virtualisierungsplattform und/oder einem Konfigurationsmanagement-Tool ausgeführt werden, die Cloud-Plattform und/oder die Virtualisierungsplattform und/oder das Konfigurationsmanagement-Tool veranlassen, eine virtuelle Instanz (11*) mindestens eines Geräts (11) des DCS (10) mit Eigenschaften erstellt, die in der deklarativen und/oder imperativen Beschreibung (12) definiert sind.

3. Verfahren (100) nach einem der Ansprüche 1 bis 2, wobei die deklarative und/oder imperative Beschreibung (12)
• eine Anzahl und/oder eine Taktrate und/oder eine Arbeitszyklusgrenze von Prozessorkernen und/oder
• eine Speichergröße und/oder
• eine Massenspeichergröße und/oder
• einen Typ einer Netzwerkschnittstelle und/oder
• eine maximale Netzwerkbandbreite,
von mindestens einer Recheninstanz, die als virtuelle Instanz (11*) von mindestens einem Gerät (11) des DCS (10) dient, und/oder eine Kennung eines Instanztyps aus einer Bibliothek von Instanztypen, die auf einer bestimmten Cloud-Plattform verfügbar sind, charakterisiert.

4. Verfahren (100) nach einem der Ansprüche 1 bis 3, wobei die deklarative und/oder imperative Beschreibung (12) eine Architektur, eine Bandbreite und/oder eine Latenz mindestens eines Netzwerks charakterisiert, mit dem mehrere virtuelle Instanzen (11*) von Geräten (11) des DCS (10) verbunden sind.

5. Verfahren (100) nach einem der Ansprüche 1 bis 4, ferner umfassend:
• testweise Ausführung (160) der Steuerlogik (3) auf der virtuellen Bereitstellung (10*) des DCS (10),
• Überwachen (170) des Verhaltens (3a) der Steuerlogik (3) während der Ausführung;
• Vergleichen (180) dieses Verhaltens (3a) mit einem vorgegebenen erwarteten Verhalten (3b) der Steuerlogik (3); und
• Auswerten (190) anhand des Ergebnisses (180a) dieses Vergleichs (180) gemäß einem vorbestimmten Kriterium (5), ob der Test der Steuerlogik (3) bestanden oder nicht bestanden wurde.

6. Verfahren (100) nach Anspruch 5, wobei die testweise Ausführung (160) umfasst, dass der mindestens eine I/O-Simulator (4) der Steuerlogik (3) Sensor- und/oder Aktordaten zuführt (161), die im Falle des Vorhandenseins eines bestimmten zu erkennenden Softwarefehlers in der Steuerlogik (3) dazu führen, dass sich das Verhalten der Steuerlogik vom erwarteten Verhalten entfernt.

7. Verfahren (100) nach Anspruch 6, wobei der zu erkennende Softwarefehler eines oder mehrere der folgenden Elemente umfasst:
• gleichzeitige oder sonstige mehrfache Verwendung ein und derselben Variablen;
• falsche Einstellung und Zurücksetzen von Variablen;
• falsche Reaktionen der Steuerlogik auf Änderungen von Variablen;
• falsche Grenz- oder Sollwerte;
• fehlende oder falsch implementierte Verriegelungslogik;
• falsch definierte Steuerungssequenzen oder Aktionsabläufe; und
• Überlauf und/oder Abschneiden von Variablen.

8. Verfahren (100) nach einem der Ansprüche 5 bis 7, ferner umfassend: als Reaktion auf die Feststellung, dass der Test der Steuerlogik bestanden wurde,
• Einrichten (200) eines physischen DCS (10), das der virtuellen Bereitstellung (10*) des DCS (10) entspricht; und
• Verbinden (210) der Geräte (11) des physischen DCS (10) mit den Betriebsmitteln, die den industriellen Prozess (1) ausführen, anstatt mit dem I/O-Simulator (4).

9. Verfahren (100) nach einem der Ansprüche 5 bis 8, ferner umfassend: als Reaktion auf die Feststellung, dass der Test der Steuerlogik nicht bestanden wurde,
• Modifizieren (220) der deklarativen und/oder imperativen Beschreibung (12) des DCS (10) und Aktualisieren (230) der virtuellen Bereitstellung (10*) des DCS (10) auf der Grundlage dieser modifizierten deklarativen und/oder imperativen Beschreibung (12); und/oder
• Modifizieren (240) der Steuerlogik (3)
mit dem Ziel, die Leistung der Steuerlogik (3) zu verbessern, und
• Fortsetzen der testweisen Ausführung (160) mit der aktualisierten virtuellen Bereitstellung (10*) des DCS (10) und/oder mit der modifizierten Steuerlogik (3).

10. Verfahren (100) nach einem der Ansprüche 5 bis 9, ferner umfassend:
• Zuweisen (250) einer Gütezahl (7) anhand eines vorbestimmten Kriteriums (6) zu einer virtuellen Bereitstellung (10*) des DCS (10) und/oder zur Ausführung der Steuerlogik (3) auf dieser virtuellen Bereitstellung (10*); und
• Optimieren (260) der deklarativen und/oder imperativen Beschreibung (12) des DCS (10) mit dem Ziel, diesen Gütefaktor (7) zu verbessern, unter der Nebenbedingung, dass der Test der Steuerlogik auf der jeweiligen virtuellen Bereitstellung (10*) des DCS (10) erfolgreich ist.

11. Verfahren nach einem der Ansprüche 5 bis 10, ferner umfassend:
• Simulieren (162) eines Ausfalls in mindestens einer virtuellen Instanz (11 *) eines Geräts (11) des DCS (10) und/oder in mindestens einer Verbindung einer solchen Instanz (11*); und
• Überwachen (163) des Einflusses dieses simulierten Ausfalls auf das Verhalten der Steuerlogik (3).

12. Computerprogramm, das maschinenlesbare Anweisungen umfasst, die, wenn sie von einem oder mehreren Computern und/oder Recheninstanzen ausgeführt werden, den einen oder die mehreren Computer und/oder Recheninstanzen veranlassen, das Verfahren (100) nach einem der Ansprüche 1 bis 11 auszuführen.

13. Nicht-flüchtiger maschinenlesbarer Datenträger mit dem Computerprogramm nach Anspruch 12.

14. Ein oder mehrere Computer und/oder Recheninstanzen mit dem Computerprogramm nach Anspruch 12 und/oder mit dem nicht-flüchtigen maschinenlesbaren Datenträger nach Anspruch 13.

## Revendications

1. Procédé (100), mis en œuvre par ordinateur, de création d'un déploiement virtuel (10*) d'un système de commande distribué, DCS, (10), pour un processus industriel (1) donné, comprenant les étapes suivantes :
• la fourniture (110) d'une topologie (2) des actifs exécutant le processus industriel (1), ainsi que d'une logique de commande (3) pour la commande de ces actifs, ladite topologie décrivant les actifs qui sont nécessaires à l'exécution du processus industriel, l'ordre dans lequel ces actifs doivent coopérer pour y parvenir, et où les actifs sont situés ;
• la fourniture (120) d'au moins un simulateur I/O (4) configuré pour fournir au DCS (10) des données de capteurs et/ou d'actionneurs réalistes dans le contexte du processus industriel (1) donné ;
• la détermination (130), sur la base au moins en partie de ladite topologie (2) des actifs et de la logique de commande (3), d'une topologie (11a) de dispositifs (11) faisant partie du DCS (10) ;
• l'établissement (140), sur la base au moins en partie de cette topologie (11a) de dispositifs (11), d'au moins une description déclarative et/ou impérative (12) du DCS (10) caractérisant de multiples dispositifs (11) du DCS (10), leur implantation, et leurs connexions ;
• la création (150), sur la base au moins en partie de la description déclarative et/ou impérative (12), d'instances virtuelles (11*) des dispositifs (11) du DCS (10) et de leurs connexions dans un environnement choisi, au moins un dispositif (11) du DCS (10) étant connecté à au moins un simulateur I/O (4), de sorte que le déploiement virtuel (10*) recherché du DCS (10) en résulte ;
• la détermination (151), à partir de la description déclarative et/ou impérative (12), d'une représentation d'un état voulu (10a*) du DCS (10) ;
• la comparaison (152) de l'état (10a) du DCS (10) obtenu par la création d'instances virtuelles (11) des dispositifs du DCS (10) et de leurs connexions audit état voulu (10a*) ; et
• en réponse à la détermination que l'état (10a) du DCS (10) diffère de l'état voulu (10a*) du DCS (10), la création, la modification et/ou la suppression (153) d'instances virtuelles (11*) de dispositifs (11) du DCS (10) et de leurs connexions dans le but de rapprocher l'état (10a) du DCS (10) de son état voulu (10a).

2. Procédé (100) selon la revendication 1, dans lequel la description déclarative et/ou impérative (12) comprend des instructions d'infrastructure en tant que code qui, lorsqu'elles sont exécutées par une plateforme cloud et/ou une plateforme de virtualisation et/ou un outil de gestion de configuration, amènent la plateforme cloud et/ou la plateforme de virtualisation et/ou l'outil de gestion de configuration à créer une instance virtuelle (11*) d'au moins un dispositif (11) du DCS (10) avec des propriétés définies dans la description déclarative et/ou impérative (12).

3. Procédé (100) selon l'une quelconque des revendications 1 à 2, dans lequel la description déclarative et/ou impérative (12) caractérise
• un nombre et/ou une vitesse d'horloge et/ou une limite de rapport cyclique de cœurs de processeur, et/ou
• une taille de mémoire, et/ou
• une taille de stockage de masse, et/ou
• un type d'interface réseau, et/ou
• une bande passante réseau maximale,
d'au moins une instance de calcul servant d'instance virtuelle (11*) d'au moins un dispositif (11) du DCS (10), et/ou un identifiant d'un type d'instance provenant d'une bibliothèque de types d'instance disponibles sur une plateforme cloud particulière.

4. Procédé (100) selon l'une quelconque des revendications 1 à 3, dans lequel la description déclarative et/ou impérative (12) caractérise une architecture, une bande passante et/ou une latence d'au moins un réseau auquel de multiples instances virtuelles (11*) de dispositifs (11) du DCS (10) sont connectées.

5. Procédé (100) selon l'une quelconque des revendications 1 à 4, comprenant en outre :
• l'exécution-test (160) de la logique de commande (3) sur le déploiement virtuel (10*) du DCS (10),
• la surveillance (170) du comportement (3a) de la logique de commande (3) pendant l'exécution ;
• la comparaison (180) de ce comportement (3a) à un comportement attendu (3b) donné de la logique de commande (3) ; et
• l'évaluation (190), à partir du résultat (180a) de cette comparaison (180), selon un critère prédéterminé (5), du succès ou de l'échec du test de la logique de commande (3).

6. Procédé (100) selon la revendication 5, dans lequel l'exécution-test (160) comprend la fourniture (161), par l'au moins un simulateur I/O (4), à la logique de commande (3), de données de capteurs et/ou d'actionneurs qui, dans le cas où une erreur logicielle particulière à détecter est présente dans la logique de commande (3), provoquent un écart du comportement de la logique de commande par rapport au comportement attendu.

7. Procédé (100) selon la revendication 6, dans lequel l'erreur logicielle à détecter comprend un ou plusieurs des éléments suivants :
• utilisation multiple, simultanée ou autre, d'une seule et même variable ;
• initialisation et réinitialisation erronées de variables ;
• réactions erronées de la logique de commande à des changements de variables ;
• valeurs limites ou de consigne erronées ;
• logique d'interverrouillage manquante ou mise en œuvre de manière erronée ;
• séquences de commande ou séquences d'actions définies de manière erronée ; et
• débordement et/ou écrêtage de variables.

8. Procédé (100) selon l'une quelconque des revendications 5 à 7, comprenant en outre : en réponse à la détermination du succès du test de la logique de commande,
• la mise en place (200) d'un DCS physique (10) correspondant au déploiement virtuel (10*) du DCS (10) ; et
• la connexion (210) des dispositifs (11) du DCS physique (10) aux actifs exécutant le processus industriel (1), plutôt qu'au simulateur I/O (4).

9. Procédé (100) selon l'une quelconque des revendications 5 à 8, comprenant en outre : en réponse à la détermination de l'échec du test de la logique de commande,
• la modification (220) de la description déclarative et/ou impérative (12) du DCS (10), et la mise à jour (230) du déploiement virtuel (10*) du DCS (10) sur la base de cette description déclarative et/ou impérative (12) modifiée ; et/ou
• la modification (240) de la logique de commande (3), en vue d'améliorer la performance de la logique de commande (3), et
• la reprise de l'exécution-test (160) avec le déploiement virtuel (10*) mis à jour du DCS (10), et/ou avec la logique de commande (3) modifiée.

10. Procédé (100) selon l'une quelconque des revendications 5 à 9, comprenant en outre :
• l'attribution (250), par un critère prédéterminé (6), à un déploiement virtuel (10*) du DCS (10) et/ou à l'exécution de la logique de commande (3) sur ce déploiement virtuel (10*), d'une figure de mérite (7) ; et
• l'optimisation (260) de la description déclarative et/ou impérative (12) du DCS (10) en vue d'améliorer cette figure de mérite (7), sous réserve du succès du test de la logique de commande sur le déploiement virtuel (10*) respectif du DCS (10).

11. Procédé selon l'une quelconque des revendications 5 à 10, comprenant en outre :
• la simulation (162) d'une défaillance dans au moins une instance virtuelle (11*) d'un dispositif (11) du DCS (10) et/ou dans au moins une connexion d'une telle instance (11*) ; et
• la surveillance (163) de l'influence de cette défaillance simulée sur le comportement de la logique de commande (3).

12. Programme d'ordinateur comprenant des instructions lisibles par machine qui, lorsqu'elles sont exécutées par un ou plusieurs ordinateurs et/ou instances de calcul, amènent le ou les ordinateurs et/ou instances de calcul à réaliser le procédé (100) selon l'une quelconque des revendications 1 à 11.

13. Support de données non transitoire lisible par machine doté du programme d'ordinateur selon la revendication 12.

14. Ordinateur(s) et/ou instance(s) de calcul dotés du programme d'ordinateur selon la revendication 12 et/ou dotés du support de données non transitoire lisible par machine selon la revendication 13.
